# EUROPEAN PATENT SPECIFICATION

(11) **EP 2 177 014 B1**
(45) Date of publication and mention of the grant of the patent: **17.11.2010**
(21) Application number: 07847685.0
(22) Date of filing: 03.12.2007
(51) Int. Cl.: H04M 1/22, H04M 1/725, A63H 1/24, A63F 9/16

(54) **IMPROVED DISPLAY BY MOVING A PORTABLE COMMUNICATION DEVICE WITH LIGHT EMITTING ELEMENTS**
VERBESSERTES DISPLAY DURCH BEWEGEN EINES TRAGBAREN KOMMUNIKATIONSGERÄTS MIT LEUCHTELEMENTEN
AFFICHAGE AMÉLIORÉ PAR DÉPLACEMENT D'UN DISPOSITIF DE COMMUNICATION PORTABLE AVEC DES ÉLÉMENTS ÉLECTROLUMINESCENTS

(30) Priority: 22.07.2007 US 781263
(43) Date of publication of application: 21.04.2010
(73) Proprietor: Sony Ericsson Mobile Communications AB, 221 88 Lund (SE)
(72) Inventor: KLINTSTRÖM, Alexander Martin, S-624 52 Lärbro (SE)
(74) Representative: Hagström, Lena
(86) International application number: PCT/EP2007/063174
(87) International publication number: WO 2009/012821

(56) References cited:
- WO-A-03/009569
- US-A- 5 903 224
- US-B1- 6 325 690

## Description

### TECHNICAL FIELD

The present invention relates to the field of portable communication devices. More particularly, the present invention relates to a device and method for displaying information by means of a portable communication device.

### BACKGROUND OF THE INVENTION

It exist a plurality of information that may be displayed to the user of a portable communication device such as an indication of the battery status, status report indicating the signal propagation conditions, the time, the date, an icon indicating missed calls, etc.

There is also a plurality of communication methods and protocols to bring a message to a portable communication device, e.g. SMS, e-mail, MMS etc. Some of these methods and protocols have notification features. For example, the receipt of an SMS may cause an icon or a user interface to appear on the display of the portable communication device.

However, such icons, information and visual indicators occupy valuable display area, and may sometimes be disturbing or even exceedingly annoying to the user, even to an extent where the readability of the display is jeopardized. A cramped display may cause severe visibility problems e.g. in case all or a substantial part of the above mentioned events occur simultaneously and may cause misinterpretation or even exclude the disabled or dyslectic user from using a portable communication device. A possible solution may be to enlarge the display area. However, the modest physical size of contemporary portable communication devices, which is desirable for reasons of portability, put a limit to the display size.

Therefore, it is a problem with user devices such as portable communication devices that all notification and information is visualized only on one single display with limited size.

A portable communication device may be a convenient tool for communication in situations where it is possible to establish a wireless radio connection with a recipient, as a portable communication device may have a modest size and may be carried consistently by the user. However, the user may find herself in situations where it is not possible to establish a connection with a portable communication device due to non existent radio signal coverage. Also, the telephone number of the intended recipient may be unknown, though the intended recipient is within sight. Such a situation may occur in an emergency situation when a user has lost her way in a savage surrounding at night time and try to get the attention of e.g. an airborne rescue vehicle.

Thus it is a problem to use a portable communication device for visual signalling or messaging in areas out of radio signal coverage or when the recipient's communication coordinates, e.g. telephone number is unknown.

There may also be a problem to display visual information on the display of a portable communication device to a large group of people, or to present visual information on a distance, due to the limited size of a conventional display means on a portable communication device. Thus the limited size of a conventional display of a portable communication device is an obstacle to distant visual communication.

On travels, or when waiting at a reception e.g. at a dentist or on similar events, it may emerge a need for distraction and amusement other than conventional games performed on the usually diminutive display of a portable communication device. As an example there may be a requirement of playing an interpersonal game between a plurality of users. Existing technology solutions concerning games on portable communication devices has certain limits, especially when it comes to interpersonal games and games that could be played independently of radio propagation conditions.

Also, mass produced devices such as portable communication devices are frequently produced in large series, causing a risk of confusing one user's portable communication device with another user's portable communication device. This may be a problem in particular e.g. in a company providing one single model of portable communication device to all of their employees. Some user equipment e.g. portable communication devices are available in different colours or have interchangeable faceplates made of different coloured plastic. However, some users may consider these attempts to personalize or customize their portable communication device as being unsatisfactory or inadequate. Also, as the number of colours is limited, the number of differentiation alternatives is also limited. Additionally, many users enjoy customizing their user equipment such as portable communication devices; in particular if they are advanced users that frequently use their user equipment. Thus there is a problem to personalize a user equipment, such as a portable communication device in order to distinguish it from other portable communication devices.

WO03/009569 A1 discloses a luminescent signalling displays implementing in a wireless mobile communication device. The wireless mobile communication device comprises a body casing having an exterior surface, and a number of light sources disposed on the exterior surface. A machine accessible medium is provided with instructions to selectively activate the number of light source in a spatial movement dependent manner to spatially paint luminescent images. Additionally a processor is coupled to the machine accessible medium to execute the instructions. As a result, spatial painting of luminescent images utilizing a wireless mobile communication device is facilitated.

### SUMMARY OF THE INVENTION

The present invention aims at obviating or reducing at least some of the above mentioned problems associated with existing technology concerning displaying information by means of portable communication devices and provide a portable communication device with an illusive display on which information may be displayed in a visually appealing manner.

A first aspect of the present invention is directed towards a portable communication device comprising a motion detection unit adapted to measure movement related data. Also, the portable communication device comprises a processing unit adapted to receive movement related data from the motion detection unit. Further, the portable communication device comprises at least one light emitting element adapted to receive control signals from the processing unit.

The processing unit is adapted to compute a lighting scheme, determining when to activate and when to deactivate the at least one light emitting element based on said movement related data. Further, the processing unit is adapted to send control information according to the lighting scheme to the at least one light emitting element for activating and deactivating the at feast one tight emitting element. In that way, the at least one light emitting element, when the portable communication device is moved repetitively over a region of space, creates an illusive display. The illusive display is adapted to illustrate information using persistence of vision of a viewer.

A second aspect of the present invention includes the features of the first aspect, further comprising a protrusive element situated on the same axis as the centre of gravity of the portable communication device.

A third aspect of the present invention includes the features of the second aspect, wherein the protrusive element comprises an antenna.

A fourth aspect of the present invention includes the features of the first aspect, wherein the motion detection unit is an accelerometer.

A fifth aspect of the present invention includes the features of the first aspect, wherein the motion detection unit is situated in one of the corners of the portable communication device.

A sixth aspect of the present invention includes the features of the first aspect, wherein the at least one light emitting element form an array of light emitting elements mounted on the portable communication device mainly perpendicular to the movement direction of the portable communication device.

A seventh aspect of the present invention includes the features of the first aspect, wherein the at least one light emitting element is adapted to emit a plurality of colours.

An eighth aspect of the present invention includes the features of the first aspect wherein the at least one light emitting element is a Light Emitting Diode (LED).

A ninth aspect of the present invention includes the features of the first aspect wherein the portable communication device comprises a memory unit.

A tenth aspect of the present invention is directed towards a method of creating an illusive display by using a wireless terminal. The portable communication device comprises a motion detection unit, a processing unit and at least one light emitting element. The method of creating an illusive display further comprises detecting the occurrence of a movement with the motion detection unit and sending the registrated movement related data to the processing unit.

The processing unit then computes when to activate and when to deactivate the at least one light emitting element. Then, the processing unit is sending control information to the at least one light emitting element for activating and deactivating the at least one light emitting element, such that the at least one light emitting element, when the portable communication device is moved repetitively over a region of space, creates an illusive display adapted to present information using persistence of vision of a viewer.

An eleventh aspect of the present invention is directed towards a computer program comprising instruction sets for performing the method according to the tenth aspect of the present invention.

A twelfth aspect of the present invention is directed towards an accessory to a portable communication device, wherein the accessory is arranged to be attached to the portable communication device. The accessory comprises a motion detection unit adapted to measure movement related data. The accessory also comprises a processing unit adapted to receive movement related data from the motion detection unit. Also, the accessory comprises at least one light emitting element adapted to receive control signals from the processing unit. The processing unit is adapted to compute when to activate and when to deactivate the at least one light emitting element. The processing unit is also adapted to send control information to the at least one light emitting element for activating and deactivating the at least one light emitting element, such that the at least one light emitting element, when the accessory is moved repetitively over a region of space, creates an illusive display adapted to present information using persistence of vision of a viewer.

A thirteenth aspect of the present invention includes the features of the twelfth aspect further comprising a protrusive element situated on the same axis as the centre of gravity of the accessory when attached to a portable communication device.

A fourteenth aspect of the present invention includes the features of the thirteenth aspect, wherein the protrusive element comprises an antenna.

A fifteenth aspect of the present invention includes the features of the twelfth aspect, wherein the motion detection unit is an accelerometer.

A sixteenth aspect of the present invention includes the features of the twelfth aspect, wherein the motion detection unit is situated in one of the corners of the portable communication device.

A seventeenth aspect of the present invention includes the features of the twelfth aspect, wherein the at least one light emitting element form an array of light emitting elements mounted on the accessory mainly perpendicular to the movement direction of the accessory.

An eighteenth aspect of the present invention includes the features of the twelfth aspect, wherein the at least one light emitting element is adapted to emit a plurality of colours.

A nineteenth aspect of the present invention includes the features of the twelfth aspect, wherein the at least one light emitting element is a Light Emitting Diode (LED).

A twentieth aspect of the present invention includes the features of the twelfth aspect, wherein the accessory comprises a memory unit.

An advantage of the present device, method, computer program and accessory is that the visibility of information displayed on a portable communication device is improved by presenting the information on an illusive display.

### BRIEF DESCRIPTION OF THE DRAWINGS

The present invention will now be described more in detail in relation to the enclosed drawings, in which:
- Figure 1A: is a schematic illustration over an embodiment of an illusive display created by spinning an invented portable communication device around like a spinning top.
- Figure 1 B: depicts a schematic illustration over a portable communication device, seen in profile, comprising a protrusive element.
- Figure 2: schematically depicts an embodiment of an illusive display created by moving an invented portable communication device repetitively back and forward over a region of space.
- Figure 3A: is a schematic illustration over an embodiment of a portable communication device according to the present invention.
- Figure 3B: is a schematic illustration over a lighting scheme, which may be computed by a processing unit in a portable communication device or accessory according to the present invention.
- Figure 4: is a flow chart illustrating a method in a portable communication device or in an accessory for creating an illusive display.
- Figure: 5 is schematically illustrating an embodiment of a system with a portable communication device and an accessory, arranged to be attached to the portable communication device and to create an illusive display.

### DETAILED DESCRIPTION OF PREFERRED EMBODIMENTS

The invention is defined as a portable communication device, a method, a computer program and an accessory which may be put into practice in the embodiments described below.

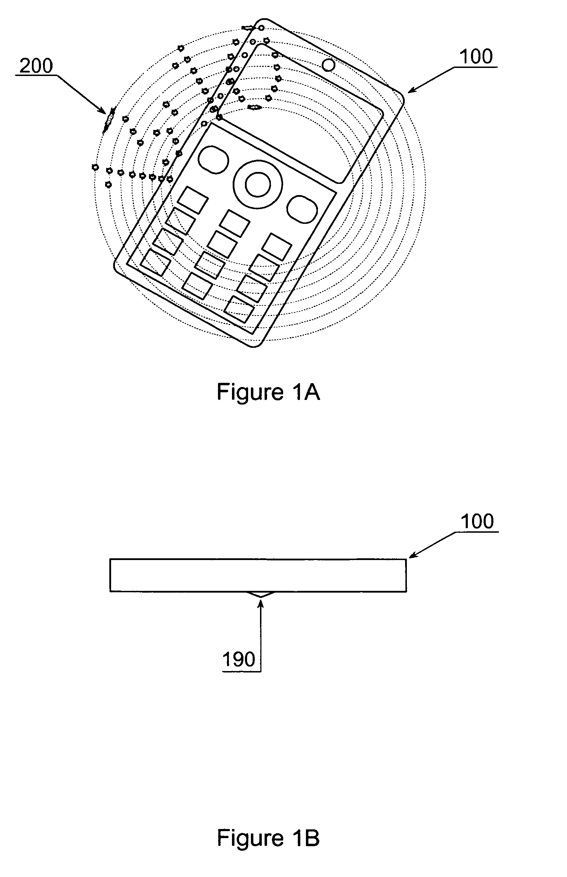

**Figure 1A** is an illustration over an illusive display 200 created by spinning an invented portable communication device 100 around like a spinning top, e.g. around a centre of gravity.

The illusive display 200 is created by activating and deactivating light emitting elements while moving the invented portable communication device 100 repetitively over a region of space, thus creating a stroboscopic effect which, due to the persistence of vision, gives a viewer the illusion of an illusive display 200.

The spinning movement illustrated in Figure 1A may be facilitated by letting the portable communication device 100 spin around a protrusive element 190 like a knob, point, nib, antenna, joint or similar element, situated e.g. on the back side of the portable communication device 100. Such protrusive element 190 is depicted in **Figure 1B**. The protrusive element 190 may with advantage be situated on the same axis as the centre of gravity of the portable communication device 100. The protrusive element 190 may in an embodiment comprise the logotype of the manufacturer of the portable communication device 100. Thus it is possible to spin the portable communication device 100 around like a like a spinning top.

The protrusive element 190 may in an embodiment comprise a ball bearing for improved functionality. The protrusive element 190 may in an embodiment be retractable into the body of the portable communication device 100 for improved portability.

In case the portable communication device 100 is a foldable portable communication device such as a clam shell or foldable knife type cellular phone, the portable communication device 100 may be spinned around a protrusive element 190 like the antenna knob, when the foldable cellular phone is rotated in unfold position.

However, the portable communication device 100 may in one embodiment be spinned in a yo-yo like manner, where the yoyo disk supports a freely pivoted mass about a low friction pivot such that as the portable communication device 100 spins in a yo-yo like manner, the mass then maintains a generally fixed geocentric orientation.

The repetitive movement made by the portable communication device 100 is by no means limited to spinning but may be any kind of repetitive movement such as rotating, reciprocating, oscillating or vibrating the portable communication device 100. A rotating movement may e.g. be made by letting a user hold the portable communication device 100 in her hand and swing her arm around in a circular orbit. A repetitive movement may e.g. be made by letting a user moving the portable communication device 100 twirling in the air as a nightstick or a baton.

A rotating movement may however also be made by letting a user hold a strap attached to the portable communication device 100 in her hand and swing her arm around in a circular orbit like a sling, thus creating a prolonged orbit. A reciprocating movement may be made by letting a user hold a strap attached to the portable communication device 100 in her hand and swing her arm in a an at leas partly circular movement like a pendulum, thus creating a prolonged orbit.

In one embodiment of the invention, the portable communication device 100 may be adapted to be attached to a handbag, e.g. with a clip. The handbag may in turn be rotated in a circular or semi circular orbit, thus bringing the portable communication device 100 to generate an illusive display 200.

An advantage of creating a prolonged orbit is that the size of the illusive display 200 accordingly may be further increased. Thus e.g. longer words or sentences may be displayed on the illusive display 200.

The strap may be attachable to the portable communication device 100 e.g. on one of the short sides of the portable communication device 100, or at any other convenient location and may also serve the purpose of carrying the portable communication device 100 e.g. around the neck of a user when the portable communication device 100 is not actively used.

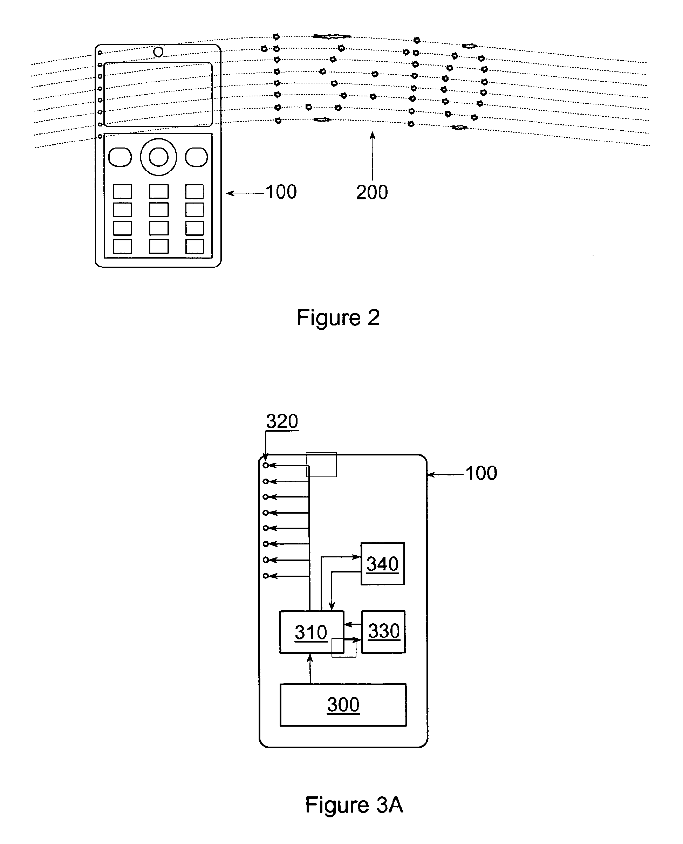

**Figure 2** depicts an illusive display 200 created by moving the invented portable communication device 100 in a reciprocating way, repetitively back and forward over a region of space.

The portable communication device 100 as herein described may in an embodiment comprise a mobile station such as a mobile cellular radiotelephone. The portable communication device 100 may however in an embodiment comprise a Personal Digital Assistant (PDA), a laptop, a computer or any other kind of device adapted to communicate, such as notebook computers, walkie-talkies, hunting radios, baby monitors etc. The portable communication device 100 may in one embodiment be a foldable portable communication device such as a clam shell or foldable knife type cellular phone e.g. Sony Ericsson W300i.

However, in order to facilitate the comprehension process, and for the sole purpose of illustration, an embodiment wherein the portable communication device 100 is embodied by means of a mobile cellular radiotelephone will now be described more in detail.

**Figure 3A** depicts a portable communication device 100 comprising a motion detection unit 300 adapted to measure movement related data. The motion detection unit 300 may be an accelerometer but may as well be any kind of instrument adapted for measuring acceleration, detecting and measuring vibrations, or for measuring inclination or acceleration due to gravity or detecting and measuring speed or movement.

The motion detection unit 300 may, besides being adapted for the purpose of detecting movements for generating an illusive display 200 be adapted also for other services that may be available on the portable communication device 100. Some examples of such other available services may comprise automatically align the screen depending on the direction the device is held. The motion detection unit 300 may also be adapted for image stabilization, provided the portable communication device 100 comprises a camera, camcorder or similar function. The motion detection unit 300 may in such case also be used for anti-blur capturing. The motion detection unit 300 may also be adapted to determine the orientation of a photo being taken and for rotating the current picture when viewing. The motion detection unit 300 may further also be adapted for the purpose of step counting. The motion detection unit 300 may also be used e.g. for the gestural input to the portable communication device 100. The motion detection unit 300 may also be adapted to determine when a user has lifted the portable communication device 100 to the ear in order to make a telephone call or answer a telephone call, and then automatically activating the telephone function of the portable communication device 100.

The motion detection unit 300 may be situated at an arbitrary position in the portable communication device 100, but in one embodiment of the invented portable communication device 100, the motion detection unit 300 is placed in one of the four corners of the portable communication device 100.

An advantage that may be achieved with placing the motion detection unit 300 at a corner of the portable communication device 100 is that the acceleration, speed and transported distance is biggest there when the portable communication device 100 is spinned or rotated. Thus the motion detection unit 300 may react with an enhanced sensibility to a change in motion.

The portable communication device 100 also comprises a processing unit 310 adapted to receive movement related data from the motion detection unit 300. The processing unit 310 may be a Central Processing Unit (CPU), a microprocessor, a Peripheral Interface Controller (PIC) microcontroller or any other appropriate device adapted to interpret computer program instructions and processes data.

Further, the portable communication device 100 also comprises at least one light emitting element 320 adapted to receive control signals from the processing unit 310. The at least one light emitting element 320 may in one embodiment be mounted on the portable communication device 100 in a column or array, in one embodiment mounted mainly perpendicular to the movement direction of the portable communication device 100.

The light emitting element 320 may be a Light-Emitting Diode (LED), an incandescent light bulb, an electric lamp, an arc lamp, a fluorescent light, a high-intensity discharge lamp, a halogen lamp, flashes or any other convenient source capable of emitting photons, thus creating an artificial light, within or without the visible spectrum. The light emitting element 320 may in one embodiment of the invention be mounted in a column or array. The array of light emitting element 320 may comprise light emitting elements 320 of different types, e.g. LEDs with different colours. The array of light emitting element 320 may however in one embodiment comprise light emitting elements 320 of the same type. The light emitting element 320 or array of light emitting elements may also be activated independently of the illusive display 200 e.g. when extra light is needed. Such a situation may occur at night time, or when intending to take a photo in bad light conditions. In one embodiment, the light emitting element 320 may be activated when the portable communication device 100 comprising the motion detection unit 300 detects a movement or certain movement pattern, thus activating a flashlight function or stroboscopic flash function.

The light emitting element 320 or array of light emitting elements may also be activated independently of the illusive display 200 in order to present the signal propagation conditions to a user. The more light emitting elements 320 that are activated, the better signal propagation conditions.

The light emitting element 320 or array of light emitting elements may also be activated independently of the illusive display 200 in order to present battery load conditions to a user. The more light emitting elements 320 that are activated, the better battery load.

The light emitting element 320 or array of light emitting elements may also be activated independently of the illusive display 200 when the portable communication device 100 receives a telephone call or message.

The light emitting element 320 or array of light emitting elements may also be activated independently of the illusive display 200 in order to produce a walking light effect at an arbitrary moment.

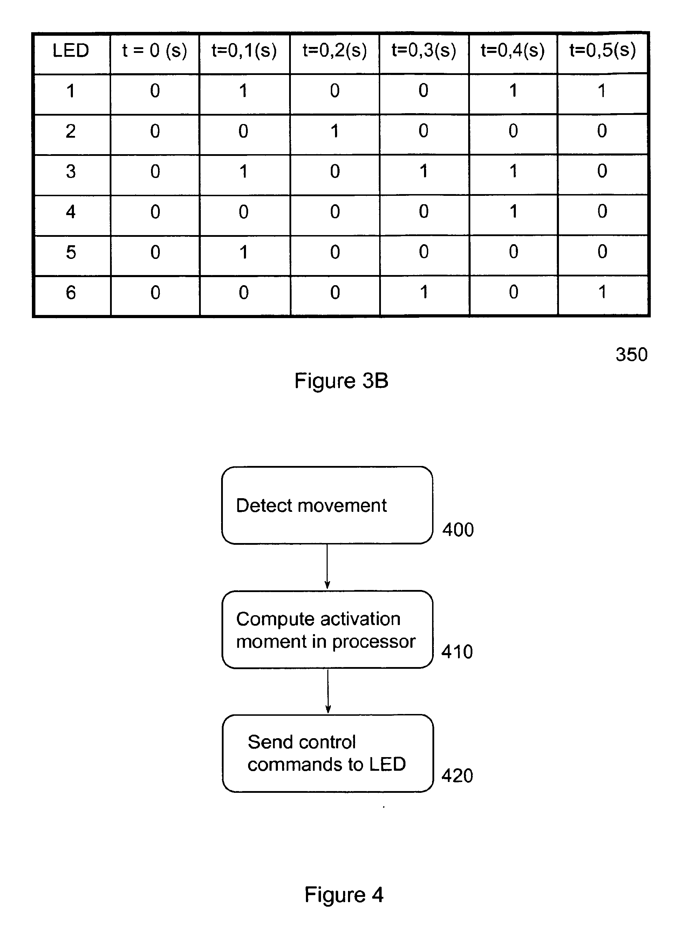

**Figure 3B** is a schematic illustration over a lighting scheme 350, which may be computed by the processing unit 310.

Further, returning to Figure 3A, the processing unit 310 is adapted to compute a lighting scheme 350 determining when to activate and when to deactivate the at least one light emitting element 320 based on the movement related data. The processing unit 310 is also adapted to send control information according to the lighting scheme 350, such as commands, to the at least one light emitting element 320 for activating and deactivating the at least one light emitting element 320, such that the at least one light emitting element 320, when the portable communication device 100 is moved repetitively over a region of space, creates an illusive display 200 adapted to illustrate information using persistence of vision of a viewer.

Thus an illusive display 200 is created, which may be used to present visual information e.g. letters, signs, images, words, sentences, light effects etc.

The processing unit 310 in the communication device 100 thus receives movement related data from the motion detection unit 300. The movement related data may be instantaneous acceleration of the motion detection unit 300. Based on that movement related data, the processing unit 310 may further calculate the speed and or the angular velocity of the motion detection unit 300. As the distance between the motion detection unit 300 and the at least one light emitting element 320 is previously known, the speed, angular velocity, position and/or translational movement for each individual light emitting element 320 may be computed, and thus also determining the moment of activating and deactivating each individual light emitting element 320.

Commands for activating and /or deactivating each light emitting element 320 is based on the computed velocity of each light emitting element 320, which has been calculated by the processing unit 310. The time period for which each light emitting element 320 is activated depends on the length of the segment that is illustrated on the illusive display 200. As an example, the sign "I" will cause a very short activation time for the array of light emitting elements 320 involved, while the sign "-" may be displayed on an illusive display 200 just activating one light emitting element 320 for an approximately three times longer time period. In this example, a horizontal movement is assumed. The repetitive movement may however be made in any other direction.

The lighting scheme 350 is a scheme for activating and deactivating each individual light emitting element 320, in case the portable communication device 100 comprises more than one light emitting element 320. In an iterative operation, the activation and deactivation times are stored e.g. in the lighting scheme 350 and may be used to adjust the period of the image or letter timing to display an information on an illusive display 200, during each cycle. Each change or stop in movement may in one embodiment be used to change the information to another word or image, such as e.g. the time. In cyclical repetitively movements, the maximum acceleration or velocity may be used as a timing period reference causing information to be displayed on the illusive display 200 within one period or a predetermined period thereof.

Further, the portable communication device 100 may also comprise a memory unit 330. The memory unit 330 may be a primary storage memory unit such as a processor register, a cache memory, a Random Access Memory (RAM) or similar. The memory unit 330 may however in one embodiment be a secondary memory unit such as a Read Only Memory (ROM), Electrically Erasable Programmable Read-Only Memory (EEPROM), programmable read-only memory (PROM) or erasable programmable read-only memory (EPROM) or a hard disk drive. The memory unit 330 may however in one embodiment be an off-line storage memory unit, a flash memory, a USB memory or a memory card. The memory unit 330 may in one embodiment be a Network-attached storage (NAS) or in fact any other appropriate medium such as a disk or a tape that can hold machine readable data.

The information presented on the illusive display 200 may be static information, such as a pre stored word or name which may be pre stored in the memory unit 330. The presented information may however alternatively be dynamic to its nature, such as presenting the clock or presenting e.g. a sentence one word at a time, wherein each word may be pre stored in the memory unit 330.

The user may at an arbitrary moment of convenience modify the information he wants to present on the illusive display 200 by entering new information on the input terminal of the portable communication device 100 and storing the new information in the memory unit 330.

The presented information may be stationary i.e. displayed on the same spot on the illusive display 200 consistently, when the portable communication device 100 is moved in a repetitive way. The presented information may however in one embodiment be apparently moving or rotating, thus animating the displayed information.

Suppose, as a non limiting example, the portable communication device 100 is brought into spinning such as illustrated by Figure 1 with a rotational speed of 6 revolutions per second. If a light emitting element 320 is turned on 6 times per second, the light emitting element 320 will appear to be in the same position in its rotational cycle, so that it appears that the light emitting element 320 is stationary, on the same spot. Furthermore, at a frequency of 6 flashes per second, persistence of vision smoothes out the sequence of flashes so that the perceived image may be perceived as more or less continuous.

If however, as another example, the portable communication device 100 is brought into spinning such as illustrated by Figure 1 with a rotational speed of 6 revolutions per second and the light emitting element 320 is turned on 5 times per second, each flash of the light emitting element 320 will be ignited at a slightly later part of its rotational cycle. Five flashes will occur before the light emitting element 320 appears in the same position again, and a viewer will perceive a series of images as if the light emitting element 320 is rotating forwards once per second.

A similar but opposite effect may occur in another example where the portable communication device 100 is brought into spinning such as illustrated by Figure 1A with a rotational speed of 6 revolutions per second and the light emitting element 320 is turned on 7 times per second.

Each flash of the light emitting element 320 ignites a little earlier in its rotational cycle and it may seem to a viewer that the light emitting element 320 is slowly rotating backwards.

The information displayed on the illusive display 200 may be any kind of information, character, numeral, text, image, cartoon character or even graphic image for animation. The processing unit 310 may be programmed to cause animation of an image or other information in successive repeated movements of the portable communication device 100 as explained above.

The portable communication device 100 may also comprise a random number generator 340. The random number generator 340 may be a pseudo random number generator.

The portable communication device 100 may also be used in combination with the random generator 340 in order to realize a virtual dice. According to this embodiment of the portable communication device 100, the random generator 340 generates a number between 1 and 6 when a motion is detected by the motion detection unit 300 and light ignition commands are sent to the light emitting devise 320, which are ignited in order to present dice dots representing the numbers 1 to 6 on an illusive display 200.

The portable communication device 100 may also in one embodiment be used to generate oracle answers e.g. function as a decision generator/indicator for ambivalent decision makers etc.

An advantage of having the illusive display 200 available on a portable communication device 100 is that most users of a portable communication device 100 always, or at least rather frequently, carry the portable communication device 100 with them.

A method in a portable communication device 100 for creating an illusive display 200 is depicted in the flow chart in **Figure 4**. The method in a portable communication device 100 for creating an illusive display 200 is realised in a number of steps 400-420.

### Step 400

The method for creating an illusive display 200 by using a portable communication device 100 comprising a motion detection unit 300, a processing unit 310 and at least one light emitting element 320 comprise detecting in step 400 the occurrence of a movement with the motion detection unit 300. The motion detection unit 300, which is comprised in the portable communication device 100 may thus initiate the generation of an illusive display 200 when a movement, acceleration or speed above a certain threshold level is detected. The generation of an illusive display 200 may also be initiated when a switch is turned on. The detected movement data may be registrated by the motion detection unit 300. The registrated movement related data is then sent in to the processing unit 310.

### Step 410

Thereafter, the processing unit 310 computes in step 410 when to activate and when to deactivate at least one light emitting element 320. When the portable communication device 100 comprises a plurality of light emitting elements 320, a calculation is made for each individual light emitting element 320.

### Step 420

When the computation in step 410 is done, control information is sent in step 420 from the processing unit 310 to the at least one light emitting element 320. The control information e.g. commands, is used for activating and deactivating the at least one light emitting element 320, such that the at least one light emitting element 320, when the portable communication device 100 is moved repetitively over a region of space, creates an illusive display 200 adapted to present information using persistence of vision of a viewer.

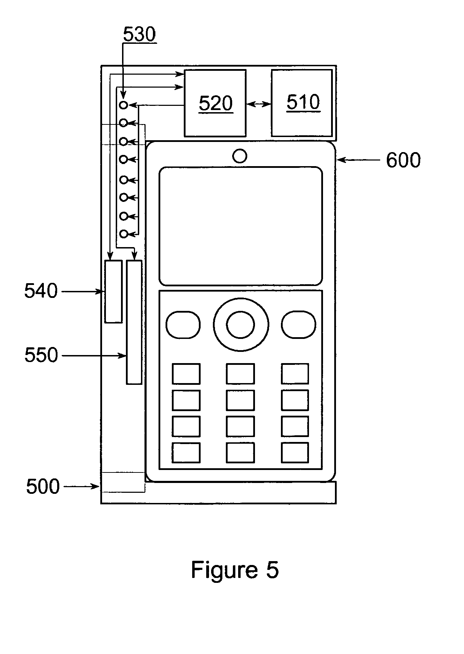

The method for creating an illusive display 200 by using a portable communication device 100 according to the present method can be implemented through one or more processors, such as the processor unit 310 in the portable communication device 100 depicted in Figure 3 and the processor unit 520 in the adaptor unit 500 depicted in Figure 5, together with computer program code for performing the functions of the method. The program code mentioned above may also be provided as a computer program product, for instance in the form of a data carrier carrying computer program code for performing the method according to the present invention when being loaded into a processor unit 310; 520. The data carrier may be a CD ROM disc, a memory stick, or any other appropriate medium such as a disk or tape that can hold machine readable data. The computer program code can furthermore be provided as pure program code on a server and downloaded to the portable communication device 100 and/or adaptor unit 500 remotely.

Thus a computer program comprising instruction sets for performing the method according to steps 400-420 may be used for implementing the previously described method.

There may emerge a need of an illusive display 200 also among users of portable communication devices 600 not being adapted to generate an illusive display 200. Such desire may be satisfied by providing an accessory 500, the accessory 500 is arranged to be attached to a portable communication device 600. Such an accessory 500 adapted to be attached to a portable communication device 600 is depicted in **Figure 5**. The attachment may be made e.g. by snapping, sticking, pinning, bolting, pinching, strapping, clipping, pegging, screwing, hooking, hinging, taping, stitching, fastening, tacking, tying, cramping, gluing, velcroing, or in any other convenient way, permanently or temporarily attaching the portable communication device 600 into the accessory 500. The accessory 500 and a portable communication device 600 thus forming a system for generating an illusive display 200.

The accessory 500 may in an embodiment be produced in a plastic material i.e. a synthetic or semi synthetic polymerization material e.g. polyvinyl chloride, polyethylene, polymethyl methacrylate, acrylics, silicones, polyurethanes, polypropylene, polystyrene, etc. However, the accessory 500 may as well be produced in e.g. metal, wood, rubber or any other convenient material.

The accessory 500 comprises a motion detection unit 510, adapted to measure movement related data. The motion detection unit 510 may be an accelerometer but may as well be any kind of instrument adapted for measuring acceleration, detecting and measuring vibrations, or for measuring inclination or acceleration due to gravity or detecting and measuring speed or movement.

The accessory 500 also comprises a processing unit 520 adapted to receive movement related data from the motion detection unit 510. Further, the accessory 500 also comprises at least one light emitting element 530 adapted to receive control signals from the processing unit 520.

The light emitting element 530 may be a Light-Emitting Diode (LED), an incandescent light bulb, an electric lamp, an arc lamp, a fluorescent light, a high-intensity discharge lamp, a halogen lamp, flashes or any other convenient source capable of emitting photons, thus creating an artificial light, within or without the visible spectrum. The light emitting element 530 may further in one embodiment of the invention be mounted in a column or array e.g. perpendicular or mainly perpendicular to the movement orbit when generating an illusive display 200. The array of light emitting element 530 may comprise light emitting elements 530 of different types, e.g. LEDs in different colours. The array of light emitting element 530 may however in one embodiment comprise light emitting elements 530 of the same type.

The processing unit 520, comprised in the accessory 500, is adapted to compute when to activate and when to deactivate the at least one light emitting element 530. The processing unit 520 may be a Central Processing Unit (CPU), a microprocessor or any other appropriate device adapted to interpret computer program instructions and processes data.

The processing unit 520 is also adapted to send control information e.g. commands, to the at least one light emitting element 530 for activating and deactivating the at least one light emitting element 530, such that the at least one light emitting element 530, when the system is moved repetitively over a region of space, creates an illusive display 200 adapted to present information using persistence of vision of a viewer.

The accessory 500 may comprise a protrusive element such as a knob, point, nib, antenna, joint or similar element, situated e.g. on the back side of the accessory 500. Thus a spinning movement of the accessory 500 with the attached portable communication device 600 may be facilitated. The protrusive element 190 may in an embodiment comprise the logotype of the manufacturer of the portable communication device 100; 600 and /or the logotype of the manufacturer of the accessory 500.The protrusive element may with advantage be situated on the same axis as the centre of gravity of the accessory 500 when a portable communication device 600 is attached to the accessory 500.

The protrusive element 190 may in an embodiment comprise a ball bearing for improved functionality. The protrusive element 190 may in an embodiment be retractable into the body of the accessory 500 for improved portability.

An advantage of the present portable communication device 100 or the accessory 500 is that due to the iterative measuring of changes in movement and recalculation of activation and deactivation periods for the light emitting devices 320; 530, the portable communication device 100 and/or the accessory 500 automatically senses changes in the period or cycle time of the motion for synchronizing information on the illusive display 200 in variable rate repetitive motion environments.

Further, the accessory 500 may also comprise a memory unit 540. The memory unit 540 may be a primary storage memory unit such as a processor register, a cache memory, a Random Access Memory (RAM) or similar. The memory unit 540 may however in one embodiment be a secondary memory unit such as a Read Only Memory (ROM), Electrically Erasable Programmable Read-Only Memory (EEPROM), programmable read-only memory (PROM) or erasable programmable read-only memory (EPROM) or a hard disk drive. The memory unit 540 may however in one embodiment be an off-line storage memory unit, a flash memory, a USB memory or a memory card. The memory unit 540 may in one embodiment comprise a Network-attached storage (NAS) or in fact any other appropriate medium such as a disk or a tape that can hold machine readable data.

The information presented on the illusive display 200 may be static information, such as a pre stored word or name which may be pre stored in the memory unit 540. The presented information may however alternatively be dynamic to its nature, such as presenting the clock or presenting e.g. a sentence one word at a time, wherein each word may be pre stored in the memory unit 540.

The accessory 500 may also comprise a random number generator 550. The random number generator 550 may be a pseudo random number generator.

The accessory 500 may also be used in combination with the random generator 550 in order to realize a virtual dice. According to this embodiment of the accessory 500, the random generator 550 generates a number between 1 and 6 when a motion is detected by the motion detection unit 510 and light ignition commands are sent to the light emitting devise 530, which are ignited in order to present dice dots representing the numbers 1 to 6 on the illusive display 200.

The accessory 500 may also in one embodiment be used to generate oracle answers e.g. function as a decision generator/indicator for ambivalent decision makers etc.

Thus an illusive display 200 is created, which may be used to present visual information such as letters, a pre stored piece of information such as the name of the owner of the mobile terminal 100; 600 or of the system with the accessory 500, the clock, the date, the day of the week, the number of the week, the month, the year and similar information. The presented visual information may also comprise the battery status, status report indicating the signal propagation conditions, an icon indicating missed calls and messages, and similar.

The battery status may be indicated by lightening light emitting elements 320; 530 in different colours when generating an illusive display according to the present method, e.g. dark green light may indicate full battery load, light green light may indicate medium battery load, yellow light may indicate low battery load and red light may indicate that the battery is almost completely discharged.

An advantage of the present portable communication device 100 or the accessory 500 is that the visibility of the display is improved by presenting some information on an illusive display 200, as the need of squeezing in information on the limited area of a non illusive display may be reduced.

Another advantage of the present portable communication device 100 or the accessory 500 is that certain selected information such as the time or battery status may be displayed with enhanced readability on an illusive display 200, using bigger letters than is possible to use on the ordinary display of a portable communication device 100 or 600, thus facilitating the reading process for disabled, aged, dyslectic and/or short-sighted user.

Another advantage of the present portable communication device 100 or the accessory 500 is that it is possible to personalize by pre storing e.g. the owner's name, the name of the owner's pet, the name of the owner's favorite ice hockey team etc, on an illusive display 200.

The portable communication device 100 or the accessory 500 may in one embodiment be used to communicate a visual message to a recipient at a distance but within sight, whose telephone number is unknown or who is not possible to reach due to bad radio propagation conditions. An example may be to display the word "Help!" on the illusive display 200 in an emergency situation when a user has lost her way in a savage surrounding at night time and try to get the attention of e.g. an airborne rescue vehicle.

Especially under such circumstances, it may be an advantage to have the invented illusive display available at the portable communication device 100 or the accessory 500 to a portable communication device 600, as a user of a portable communication device 100; 600 normally carry the portable communication device 100; 600 with her al the time or at least rather frequently.

The portable communication device 100 or the accessory 500 may in one embodiment be used to communicate a visual message to a recipient in an ambiance where the telephone function of a portable communication device 100 may not be feasible or allowed to use, e.g. to signal the users position in a sports arena to a recipient by presenting e.g. the recipients name on the illusive display 200.

The portable communication device 100 or the accessory 500 may in one embodiment be used to communicate a visual message to a recipient with an unknown telephone number, such as emitting a visual comment on the illusive display 200 to the driver of a vehicle in a traffic situation. Such visual communication may in an embodiment comprise also less favourable remarks and even not quite so flattering comments or illustrated dubious gestures.

The portable communication device 100 or the accessory 500 may in one embodiment be used to communicate a visual message on the illusive display 200 in dialog with a recipient at a distance but within sight, who also has access to a portable communication device 100 or an accessory 500 capable of generating an illusive display 200.

An advantage is that the portable communication device 100 or the accessory 500 may be used for visual communication on an illusive display 200 in accordance with at least some of the described embodiments free of charge, without need of a subscription to a service provider.

The portable communication device 100 or the accessory 500 may in one embodiment be used as a party booster, providing coloured and/ or information such as text, images or stroboscopicly blinking flashes on the illusive display 200. In an embodiment, a music player such as an MP3 player may be comprised in the portable communication device 100 or in the portable communication device 600 or in the accessory 500, and activated simultaneously with the generation of the illusive display 200 when the portable communication device 100 or the accessory 500 is set into party booster mode.

The portable communication device 100 or the accessory 500 may in one embodiment be used by e.g. a museum guide for assembling an audience group and to communicate a visual message on the illusive display 200 to the audience in a museum or on a guided tour at an arbitrary location such as a city guidance tour. The visual message on the illusive display 200 may in an embodiment comprise signs from Asiatic alphabets e.g. Chinese or Japanese.

The portable communication device 100 or accessory 500 may in one embodiment provide a game facility by e.g. by counting the number of revolutions a user may spin the portable communication device 100 or system comprising the accessory 500 and letting the light emitting elements 320; 530 change colours for every ten revolutions. Thus making it possible to compete e.g. who could make the largest number of revolutions etc.

The portable communication device 100 or the accessory 500 may in one embodiment be used as a spirit level, measuring the inclination of the portable communication device 100 or system comprising the accessory 500 by using measurements made by the motion detection unit 300, measuring acceleration due to gravity.

The portable communication device 100 or the accessory 500 may in one embodiment be adapted to be attached to the spoke of a bicycle wheel, emitting light or some informative message on an illusive display 200, thus serving as a traffic security device as the visibility of the biker and the bicycle to other trafficants may be improved, especially in obscure lightening.

The portable communication device 100 or the accessory 500 may in one embodiment be adapted to be attached to the spoke of a bicycle wheel, emitting light according to a colour scheme according to the velocity of the bicycle e.g. blue light for less than 5 km/hour, green light for 5-10 km/hour, yellow light for 10-20 km/hour, orange light for 20-30 km/hour, red light for 30-40 km/hour, strobing red light for 40-50 km/hour etc. The portable communication device 100 or the accessory 500 may thus serve as a speedometer and/or a physical training enhancement and stimulation device.

The portable communication device 100 or the accessor 500 may in one embodiment be adapted to be attached to the arm or hand of a pedestrian, emitting light or some informative message on an illusive display 200, thus serving as a traffic security device as the visibility of the enlightened pedestrian to other trafficants may be improved, especially in obscure lightening.

The portable communication device 100 or the accessory 500 may in one embodiment be adapted to be attached to the arm or hand of a pedestrian, emitting light according to a colour scheme according to the velocity of the pedestrian e.g. blue light for less than 2 km/hour, green light for 2-5 km/hour, yellow light for 5-10 km/hour, orange light for 10-20 km/hour, red light for 20-30 km/hour, strobing red light for 30-40 km/hour etc. The portable communication device 100 or the accessory 500 may thus serve as a speedometer and/or a physical training enhancement and stimulation device.

While the portable communication device 100 and method of generating an illusive display 200, computer program and accessory 500 described in this document, is susceptible to various modifications and alternative forms, specific embodiments thereof are shown by way of example in the drawings and are herein described in detail. It should be understood, however, that there is no intent to limit the present portable communication device 100, method of generating an illusive display 200, computer program or accessory 500 to any of the particular forms disclosed, but on the contrary, the present portable communication device 100 and method of generating an illusive display 200 is to cover all modifications, equivalents, and alternatives falling within the scope of the portable communication device 100, method of generating an illusive display 200, computer program and accessory 500 as defined by the claims.

Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present.

Furthermore, "connected" or "coupled" as used herein may include wirelessly connected or coupled. As used herein, the term "and/or" includes any and all combinations of one or more of the associated listed items.

Unless otherwise defined, all terms including technical and scientific terms used herein have the same meaning as commonly understood by one of ordinary skill in the art to which the portable communication device 100, method of generating an illusive display 200, computer program and/or accessory 500 belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A portable communication device (100) comprising:
a motion detection unit (300) adapted to measure movement related data,
a processing unit (310) adapted to receive movement related data from the motion detection unit (300), and
at least one light emitting element (320) adapted to receive control signals from the processing unit (310), wherein:
the processing unit (310) is adapted to compute a lighting scheme (350) determining when to activate and when to deactivate the at least one light emitting element (320) based on said movement related data, and to send control information according to said lighting scheme (350) to the at least one light emitting element (320) for activating and deactivating the at least one light emitting element (320), such that the at least one light emitting element (320), when the portable communication device (100) is moved repetitively over a region of space, creates an illusive display (200) adapted to illustrate information,
the portable communication device (100) is **characterized by** a protrusive element (190) situated on the same axis as the centre of gravity of the portable communication device (100).

2. A portable communication device (100) according to claim 1, wherein the protrusive element (190) comprises an antenna.

3. A portable communication device (100) according to any of the claims 1-2, wherein the motion detection unit (300) is an accelerometer.

4. A portable communication device (100) according to any of the claims 1-3, wherein the motion detection unit (300) is situated in one of the corners of the portable communication device (100).

5. A portable communication device (100) according to any of the claims 1-4, comprising a plurality of light emitting elements (320), which form an array of light emitting elements (320) mounted on the portable communication device (100) mainly perpendicular to the movement direction of the portable communication device (100).

6. A portable communication device (100) according to any of the claims 1-5, wherein the at least one light emitting element (320) is adapted to emit a plurality of colours.

7. A portable communication device (100) according to any of the claims 1-6, wherein the at least one light emitting element (320) is a Light Emitting Diode "LED".

8. A portable communication device (100) according to any of the claims 1-7, wherein the portable communication device (100) comprises a memory unit (330).

9. A method for creating an illusive display by using a portable communication device (100) comprising a motion detection unit (300), a processing unit (310) and at least one light emitting element (320) comprising the steps of :
*detecting* (400) the occurrence of a movement of the portable communication device (100),
*computing* (410) a lighting scheme (350), based on the detected movement, when to activate and when to deactivate the at least one light emitting element (320),
*sending* (420) control information to the at least one light emitting element (320) according to said lighting scheme (350) for activating and deactivating the at least one light emitting element (320), such that the at least one light emitting element (320), when the portable communication device (100) is moved repetitively over a region of space, creates an illusive display (200) adapted to present information, the method is **characterized by** the step of:
*spinning* the portable communication device (100) around a protrusive element (190) situated on the same axis as the centre of gravity of the portable communication device (100).

10. A computer program comprising instruction sets for performing a method according to claim 9.

11. An accessory (500) arranged to be attached to a portable communication device (100, 600), the accessory (500) further comprising:
a motion detection unit (510) adapted to measure movement related data,
a processing unit (520) adapted to receive movement related data from the motion detection unit (510), and
at least one light emitting element (530) adapted to receive control signals from the processing unit (520), wherein
the processing unit (520) is adapted to compute a lighting scheme (350) determining when to activate and when to deactivate the at least one light emitting element (530) based on said movement related data, and to send control information according to said lighting scheme (350) to the at least one light emitting element (530) for activating and
deactivating the at least one light emitting element (530), such that the at least one light emitting element (530) creates an illusive display (200) adapted to illustrate information when the accessory (500) is moved repetitively over a region of space,
the accessory (500) is **characterised by** a protrusive element (190) situated on the same axis as the common centre of gravity of the accessory (500) attached to a portable communication device (100, 600).

12. An accessory (500) according to claim 11 wherein the protrusive element (190) comprises an antenna.

13. An accessory (500) according to any of the claims 10-11, wherein the motion detection unit (510) is an accelerometer.

14. An accessory (500) according to any of the claims 10-13, wherein the motion detection unit (510) is situated in one of the corners of the portable communication device (100,600).

15. An accessory (500) according to any of the claims 10-14, comprising a plurality of light emitting elements (320), which form an array of light emitting elements (530) mounted on the accessory (500) mainly perpendicular to the movement direction of the accessory (500).

## Patentansprüche

1. Tragbares Kommunikationsgerät (100), umfassend:
eine Bewegungserfassungseinheit (300), die eingerichtet ist, um bewegungsbezogene Daten zu messen,
eine Verarbeitungseinheit (310), die eingerichtet ist, um bewegungsbezogene Daten von der Bewegungserfassungseinheit (300) zu empfangen, und
mindestens ein Licht emittierendes Element (320), das eingerichtet ist, um Steuersignale von der Verarbeitungseinheit (310) zu empfangen, wobei:
die Verarbeitungseinheit (310) eingerichtet ist, um ein Leuchtschema (350) zu berechnen, das bestimmt, wann das mindestens eine Licht emittierende Element (320) zu aktivieren ist und wann es zu deaktivieren ist basierend auf den bewegungsbezogenen Daten, und, um Steuerinformation gemäß des Leuchtschemas (350) zu dem mindestens einen Licht emittierenden Element (320) zu senden zum Aktiveren und Deaktivieren des mindestens einen Licht emittierenden Elements (320), so dass das mindestens eine Licht emittierende Element (320), wenn das tragbare Kommunikationsgerät (100) wiederholt über einen Bereich bewegt wird, eine täuschende Anzeige (200) erzeugt, die eingerichtet ist, um Information darzustellen;
das tragbare Kommunikationsendgerät (100) **gekennzeichnet ist durch** ein vorstehendes Element (190), das auf derselben Achse wie der Schwerpunkt des tragbaren Kommunikationsgeräts (100) gelegen ist.

2. Tragbares Kommunikationsgerät (100) nach Anspruch 1, wobei das vorstehende Element (190) eine Antenne umfasst.

3. Tragbares Kommunikationsgerät (100) nach einem der Ansprüche 1 bis 2, wobei die Bewegungserfassungseinheit (300) ein Beschleunigungsmesser ist.

4. Tragbares Kommunikationsgerät (100) nach einem der Ansprüche 1 bis 3, wobei die Bewegungserfassungseinheit (300) in einer der Ecken des tragbaren Kommunikationsgeräts (100) gelegen ist.

5. Tragbares Kommunikationsgerät (100) nach einem der Ansprüche 1 bis 4 , umfassend eine Vielzahl von Licht emittierenden Elementen (320), welche ein Array von Licht emittierenden Elementen (320) bilden, welches auf dem tragbaren Kommunikationsgerät (100) im Wesentlichen senkrecht zu der Bewegungsrichtung des tragbaren Kommunikationsgeräts (100) befestigt ist.

6. Tragbares Kommunikationsgerät (100) nach einem der Ansprüche 1 bis 5, wobei das mindestens eine Licht emittierende Element (320) eingerichtet ist, um eine Vielzahl von Farben zu emittieren.

7. Tragbares Kommunikationsgerät (100) nach einem der Ansprüche 1 bis 6, wobei das mindestens eine Licht emittierende Element (320) eine Light Emitting Diode "LED" ist.

8. Tragbares Kommunikationsgerät (100) nach einem der Ansprüche 1 bis 7, wobei das tragbare Kommunikationsgerät (100) eine Speichereinheit (330) umfasst.

9. Verfahren zum Erzeugen einer täuschenden Anzeige unter Verwendung eines tragbaren Kommunikationsgeräts (100), umfassend eine Bewegungserfassungseinheit (300), eine Verarbeitungseinheit (310) und mindestens ein Licht emittierendes Element (320), die Schritte umfassend:
Erfassen (400) des Auftretens einer Bewegung des tragbaren Kommunikationsgeräts (100),
Berechnen (410) eines Leuchtschemas (350), basierend auf der erfassten Bewegung, das mindestens eine Licht emittierende Element (320) zu aktivieren ist und wann es zu deaktivieren ist,
Senden (420) von Steuerinformation zu mindestens einem Licht emittierenden Element (320) gemäß dem Leuchtschema (350) zum Aktivieren und Deaktivieren des mindestens einen Licht emittierenden Elements (320), so dass das mindestens eine Licht emittierende Element (320), wenn das tragbare Kommunikationsgerät (100) wiederholt über einen Bereich bewegt wird, eine täuschende Anzeige (200) erzeugt, welche eingerichtet ist, um Information zu präsentieren, wobei das Verfahren **gekennzeichnet ist durch** die Schritte:
Drehen des tragbaren Kommunikationsgeräts (100), um ein hervorstehendes Element (190), das auf der gleichen Achse wie der Schwerpunkt des tragbaren Kommunikationsgeräts (100) gelegen ist.

10. Computerprogramm, welches Befehlssätze zum Durchführen eines Verfahrens nach Anspruch 9 umfasst.

11. Zusatzteil (500), welches eingerichtet ist, um an einem tragbaren Kommunikationsgerät (100, 600) angebracht zu werden, wobei das Zusatzteil (500) ferner umfasst:
eine Bewegungserfassungseinheit (510), die eingerichtet ist, um bewegungsbezogene Daten zu messen,
eine Verarbeitungseinheit (520), die eingerichtet ist, um bewegungsbezogene Daten von der Bewegungserfassungseinheit (510) zu empfangen, und
mindestens ein Licht emittierendes Element (530), das eingerichtet ist, um Steuersignale von der Verarbeitungseinheit (520) zu empfangen, wobei:
die Verarbeitungseinheit (520) eingerichtet ist, um ein Leuchtschema (350) zu berechnen, das bestimmt, wann das mindestens eine Licht emittierende Element (530) zu aktivieren ist und wann es zu deaktivieren ist basierend auf den bewegungsbezogenen Daten, und, um Steuerinformation gemäß des Leuchtschemas (350) zu dem mindestens einen Licht emittierenden Element (530) zu senden zum Aktiveren und Deaktivieren des mindestens einen Licht emittierenden Elements (530), so dass das mindestens eine Licht emittierende Element (530) eine täuschende Anzeige (200) erzeugt, die eingerichtet ist, um Information darzustellen, wenn das tragbare Kommunikationsgerät (100) wiederholt über einen Bereich bewegt wird;
das Zusatzteil (500) **gekennzeichnet ist durch** ein vorstehendes Element (190), das auf derselben Achse wie der gemeinsame Schwerpunkt des Zusatzteils (500), das an einem tragbaren Kommunikationsgerät (100, 600) angebracht ist, gelegen ist.

12. Zusatzteil (500) nach Anspruch 11, wobei das vorstehende Element (190) eine Antenne umfasst.

13. Zusatzteil (500) nach einem der Ansprüche 10 bis 11, wobei die Bewegungserfassungseinheit (510) ein Beschleunigungsmesser ist.

14. Zusatzteil (500) nach einem der Ansprüche 10 bis 13, wobei die Bewegungserfassungseinheit (510) in einer der Ecken des tragbaren Kommunikationsgeräts (100, 600) gelegen ist.

15. Zusatzteil (500) nach einem der Ansprüche 10 bis 14, umfassend eine Vielzahl von Licht emittierenden Elementen (320), welche ein Array von Licht emittierenden Elementen (530) bilden, welches auf dem Zusatzteil (500) im Wesentlichen senkrecht zu der Bewegungsrichtung des Zusatzteils (500) befestigt ist.

## Revendications

1. Dispositif portatif de communication (100), comprenant :
une unité de détection de mouvement (300), conçue pour mesurer des données liées au mouvement ;
une unité de traitement (310), conçue pour recevoir de l'unité de détection de mouvement (300) des données liées au mouvement ; et
au moins un élément émetteur de lumière (320), conçu pour recevoir des signaux de commande de l'unité de traitement (310) ;
dans lequel l'unité de traitement (310) est conçue pour calculer un motif d'éclairement (350) qui détermine quand doit être activé et désactivé ledit au moins un élément émetteur de lumière (320), sur la base desdites données liées au mouvement, et pour envoyer, sur la base dudit motif d'éclairement (350), des informations de commande audit au moins un élément émetteur de lumière (320), pour activer et désactiver l'au moins un élément émetteur de lumière (320), si bien que ledit au moins un élément émetteur de lumière (320), lorsque le dispositif portatif de communication (100) est déplacé répétitivement dans une région de l'espace, crée une illusion d'affichage (200) conçue pour illustrer des informations,
le dispositif portatif de communication (100) est **caractérisé par** un élément en saillie (190) situé sur le même axe que le centre de gravité du dispositif portatif de communication (100).

2. Dispositif portatif de communication (100) selon la revendication 1, dans lequel l'élément en saillie (190) comprend une antenne.

3. Dispositif portatif de communication (100) selon l'une quelconque des revendications 1 et 2, dans lequel l'unité de détection de mouvement (300) est un accéléromètre.

4. Dispositif portatif de communication (100) selon l'une quelconque des revendications 1 à 3, dans lequel l'unité de détection de mouvement (300) est située dans un angle du dispositif portatif de communication (100).

5. Dispositif portatif de communication (100) selon l'une quelconque des revendications 1 à 4, comprenant une pluralité d'éléments émetteurs de lumière (320) qui forment un réseau d'éléments émetteurs de lumière (320) implantés sur le dispositif portatif de communication (100) de manière essentiellement perpendiculaire à la direction de mouvement du dispositif portatif de communication (100).

6. Dispositif portatif de communication (100) selon l'une quelconque des revendications 1 à 5, dans lequel ledit au moins un élément émetteur de lumière (320) est conçu pour émettre une pluralité de couleurs.

7. Dispositif portatif de communication (100) selon l'une quelconque des revendications 1 à 6, dans lequel ledit au moins un élément émetteur de lumière (320) est une diode électroluminescente (LED).

8. Dispositif portatif de communication (100) selon l'une quelconque des revendications 1 à 7, dans lequel le dispositif portatif de communication (100) comprend une unité de mémoire (330).

9. Procédé de création d'une illusion d'affichage en utilisant un dispositif portatif de communication (100) comprenant une unité de détection de mouvement (300), une unité de traitement (310) et au moins un élément émetteur de lumière (320), comprenant les étapes consistant à :
détecter (400) l'occurrence d'un mouvement du dispositif portatif de communication (100) ;
calculer (410), sur la base du mouvement détecté, un motif d'éclairement (350) qui détermine quand activer et quand désactiver ledit au moins un élément émetteur de lumière (320) ;
envoyer (420) des informations de commande audit au moins un élément émetteur de lumière (320), d'après ledit motif d'éclairement (350), afin d'activer et de désactiver ledit au moins un élément émetteur de lumière (320), si bien que ledit au moins un élément émetteur de lumière (320), lorsque le dispositif portatif de communication (100) est déplacé répétitivement dans une région de l'espace, crée une illusion d'affichage (200) conçue pour présenter des informations, le procédé étant **caractérisé par** l'étape consistant à :
faire tourner le dispositif portatif de communication (100) autour d'un élément en saillie (190) situé sur le même axe que le centre de gravité du dispositif portatif de communication (100).

10. Programme d'ordinateur comprenant des ensembles d'instructions destinés à exécuter un procédé selon la revendication 9.

11. Accessoire (500) conçu pour être monté sur un dispositif portatif de communication (100, 600), l'accessoire (500) comprenant en outre :
une unité de détection de mouvement (510), conçue pour mesurer des données liées au mouvement ;
une unité de traitement (520), conçue pour recevoir de l'unité de détection de mouvement (510) des données liées au mouvement ; et
au moins un élément émetteur de lumière (530), conçu pour recevoir des signaux de commande de l'unité de traitement (520) ;
dans lequel l'unité de traitement (520) est conçue pour calculer un motif d'éclairement (350) qui détermine quand doit être activé et désactivé ledit au moins un élément émetteur de lumière (530), sur la base desdites données liées au mouvement, et pour envoyer, sur la base dudit motif d'éclairement (350), des informations de commande audit au moins un élément émetteur de lumière (530), pour activer et désactiver l'au moins un élément émetteur de lumière (530), si bien que ledit au moins un élément émetteur de lumière (530) crée une illusion d'affichage (200) conçue pour illustrer des informations,
lorsque l'accessoire (500) est déplacé répétitivement dans une région de l'espace,
l'accessoire (500) est **caractérisé par** un élément en saillie (190) situé sur le même axe que le centre de gravité commun de l'accessoire (500) monté sur un dispositif portatif de communication (100, 600).

12. Accessoire (500) selon la revendication 11, dans lequel l'élément en saillie (190) comprend une antenne.

13. Accessoire (500) selon l'une quelconque des revendications 10 et 11, dans lequel l'unité de détection de mouvement (510) est un accéléromètre.

14. Accessoire (500) selon l'une quelconque des revendications 10 à 13, dans lequel l'unité de détection de mouvement (510) est située dans un angle du dispositif portatif de communication (100, 600).

15. Accessoire (500) selon l'une quelconque des revendications 10 à 14, comprenant une pluralité d'éléments émetteurs de lumière (320) qui forment un réseau d'éléments émetteurs de lumière (530) implanté sur l'accessoire (500) de manière essentiellement perpendiculaire à la direction de mouvement de l'accessoire (500).
